# EUROPEAN PATENT APPLICATION

(11) **EP 4 307 614 A2**
(43) Date of publication of application: **17.01.2024**
(21) Application number: 23211923.0
(22) Date of filing: 26.02.2020
(51) Int. Cl.: H04L 9/40

(54) **DYNAMICALLY DETERMINING ROUTING DURING SHIPPING**

(30) Priority: 28.03.2019 US 201962825710 P; 28.06.2019 US 201916457056
(62) Divisional of application: 20713483.4
(71) Applicant: eBay Inc., San Jose, CA 95125 (US)
(72) Inventor: SMITH, JR., Leonard, San Jose, 95122 (US)
(74) Representative: Müller-Boré & Partner Patentanwälte PartG mbB

(57) **Abstract**

A method, a system and computer storage media for dynamically rerouting a package are provided. The method comprises receiving a route selection from a sender device along with one or more routing rules for shipping a package to a recipient; receiving one or more routing rules from a recipient device; storing the route and the routing rules in a secure blockchain supported by a decentralized blockchain network; monitoring conditions relative to the routing rules; and determining whether conditions of one of the routing rules are satisfied to trigger an action defined in the routing rule.

## Description

### BACKGROUND

At present, shipping routes for packages are typically directed toward delivery of a package to a fixed location, e.g. a home street address for a recipient. However, recipients often move between locations over the course of a day or week. Conventional shipping systems provide limited flexibility in terms of routing.

It is with respect to these and other considerations that the disclosure made herein is presented.

### SUMMARY

Technologies are disclosed that concern methods, systems and media for dynamically rerouting a package during shipment that involve receiving a shipping route for shipping a package to a recipient, receiving rules for rerouting the package based on physical conditions. Also involved is monitoring physical conditions relating to the package and physical conditions relating to the recipient and determining whether one of the rules for rerouting applies to the physical conditions relating to the package and physical conditions relating to the recipient. If one of the rules for rerouting the package applies to the physical conditions relating to the package and physical conditions relating to the recipient, the technology involves triggering an action defined for the rule that applies to the physical conditions.

In certain examples, the action defined for the one of the rules that applies to the physical conditions involves sending a reroute instruction to a shipper in the shipping route. In some examples, the physical conditions can include a current time of day, a current location of the package and an anticipated location of the package, a current location of the recipient, and an anticipated location of the recipient at the later time of day.

Other examples involve sending a notification message to the recipient with physical conditions relating to the package, receiving a reroute message from the recipient with an alternate geolocation, rerouting the package based on the alternate geolocation, and sending a reroute instruction to a shipper to reroute the package to the alternate geolocation.

In particular examples, the action defined for the one of the rules that applies to the physical conditions involves sending a notification to the recipient offering a special delivery option, receiving a message from the recipient accepting the special delivery option, responsive to receiving the message accepting the special delivery option, sending a rerouting instruction to reroute the package for the special delivery option. Some of these examples involve, responsive to receiving the message selecting the special delivery option, charging the recipient a fee for the special delivery option.

In yet other examples, the rules for rerouting the package based on physical conditions includes at least one of a rule based on current physical proximity of the package and the recipient, a rule based on anticipated proximity of the package and the recipient, a rule based on an anticipated time of arrival for the package, and a rule based on an anticipated location of the recipient.

In one other example, one of the rules for rerouting the package based on physical conditions involves a rule to reroute the package to a geolocation of the recipient and the action defined for the rule to reroute the package to a geolocation of the recipient comprises sending a rerouting instruction to deliver the package to the geolocation of the recipient.

It should be appreciated that the above-described subject matter may also be implemented as a computer-controlled apparatus, a computer process, a computing system, or as an article of manufacture such as a computer-readable medium. These and various other features will be apparent from a reading of the following Detailed Description and a review of the associated drawings. This Summary is provided to introduce a selection of concepts in a simplified form that are further described below in the Detailed Description.

This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items.
FIGURE 1 is an architectural diagram showing an illustrative example of a system for dynamically rerouting packages from a sender to a recipient in a shipping network;
FIGURE 2 is a data architecture diagram illustrating one example of data flows for dynamically rerouting packages from a sender to a recipient in a shipping network involving routing rules based on current or anticipated physical conditions for package or recipient;
FIGURE 3 is a schematic diagram illustrating an example of a user interface on a recipient client server device for notification of a recipient;
FIGURE 4 is a control flow diagram illustrating an example of a process in a routing service for dynamically rerouting packages based on physical conditions;
FIGURE 5 is a control flow diagram illustrating one example of an implementation of a monitoring process in the routing service 140;
FIGURE 6A is a control flow diagram showing an illustrative example of an implementation of a monitoring process in a routing service 140 that relates to an optional routing rule;
FIGURE 6B is a control flow diagram showing yet another illustrative example of an implementation of a monitoring process in a routing service 140 that relates to a recipient rerouting request or rule;
FIGURE 7 is a computer architecture diagram illustrating an illustrative computer hardware and software architecture for a computing system capable of implementing aspects of the techniques and technologies presented herein;
FIGURE 8 is a diagram illustrating a distributed computing environment capable of implementing aspects of the techniques and technologies presented herein; and
FIGURE 9 is a computer architecture diagram illustrating a computing device architecture for a computing device capable of implementing aspects of the techniques and technologies presented herein.

### DETAILED DESCRIPTION

In general terms, the disclosed technology is directed towards rerouting a package during shipment based on current or anticipated conditions. For example, if the package is located within a certain proximity of the recipient, then the package can be rerouted to the recipient's location. In another example, if the package will be located within a particular proximity of an anticipated location of the recipient, then the package can be rerouted for delivery at the anticipated location of the recipient. For instance, if the recipient happens to be at a location, e.g. a store, when the package is on a nearby delivery truck, then delivery can be rerouted to the recipient's current location.

In other examples, an in-transit package can be rerouted based on anticipated delivery time of the package. In one scenario, if the package will arrive between 9 am and 5 pm, then the recipient can direct the package to be delivered to a work address. However, if the package will arrive after 5 pm, the recipient can direct the package to be delivered to a home address.

In certain other examples, the recipient can be notified that the package is nearby and can be optionally delivered for an additional fee. If the recipient selects the delivery option, then the recipient can be charged the additional fee and the package is rerouted to the recipient's current location.

It will be readily appreciated that the disclosed technology is versatile and flexible and can include additional features. For example, the disclosed technology can enable shipping entities to perform special handling for packages. Also, particular aspects of the disclosed technology can enable an item to be dynamically routed during shipping based on routing rules and conditions, such as anticipated delivery time, recipient schedule conflicts and relative location of the package and the recipient.

One technical advantage of certain aspects of disclosed technology is that the routing information can be utilized to dynamically route the package to different geolocation addresses for delivery to improve efficiency and reduce the risk of theft.

The following Detailed Description describes technologies for dynamically rerouting a package during shipment in accordance with certain aspects of the disclosed technology.

As will be described in more detail herein, it can be appreciated that implementations of the techniques and technologies described herein may include the use of solid state circuits, digital logic circuits, computer components, and/or software executing on one or more input devices. Signals described herein may include analog and/or digital signals for communicating a changed state of the data file or other information pertaining to the data file.

While the subject matter described herein is presented in the general context of program modules that execute in conjunction with the execution of an operating system and application programs on a computer system, those skilled in the art will recognize that other implementations may be performed in combination with other types of program modules. Generally, program modules include routines, programs, components, data structures, and other types of structures that perform particular tasks or implement particular abstract data types. Moreover, those skilled in the art will appreciate that the subject matter described herein may be practiced with other computer system configurations, including multiprocessor systems, mainframe computers, microprocessor-based or programmable consumer electronics, minicomputers, hand-held devices, and the like.

In the following detailed description, references are made to the accompanying drawings that form a part hereof, and in which are shown by way of illustration specific configurations or examples. Referring now to the drawings, in which like numerals represent like elements throughout the several figures, aspects of a computing system, computer-readable storage medium, and computer-implemented methodologies for managing package shipment involving multiple shipping entities utilizing routing information on a blockchain will be described. As will be described in more detail below with respect to the figures, there are several applications and services that can embody the functionality and techniques described herein.

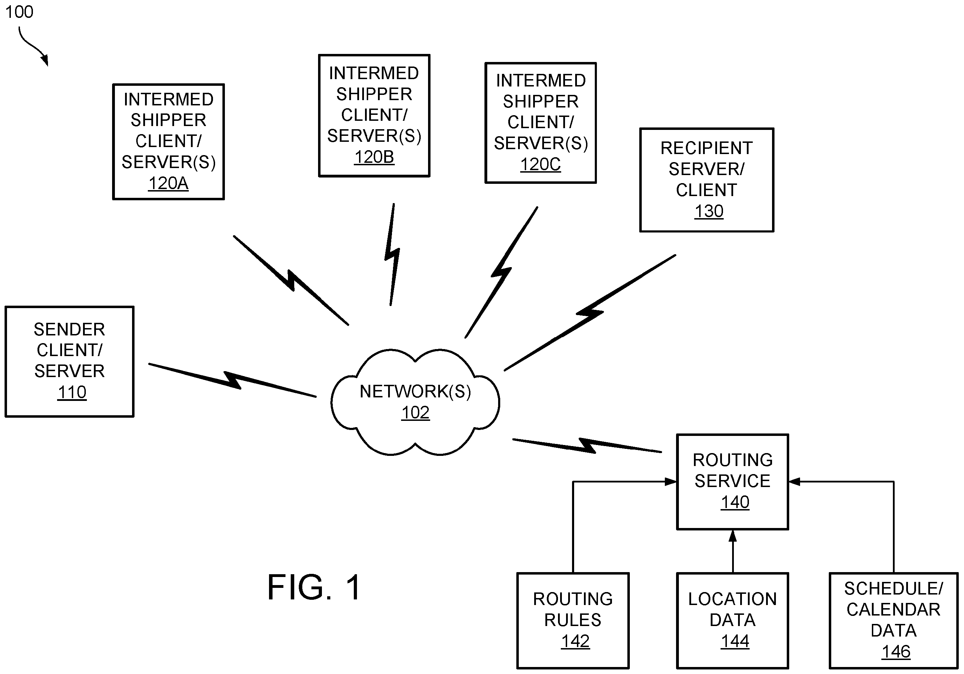

FIGURE 1 is an architectural diagram showing an illustrative example of a system architecture 100 that provides a simplified context for the disclosed technology. A seller or sender client or server 110, intermediary shipper clients or servers 120A-C, routing service 140, and a buyer or recipient client or server device 130, are in communication via a network 102.

Routing service 140 can be in communication with routing rules store 142 that stores rules for rerouting a package based on current or anticipated physical conditions, location/physical data store 144 that stores data relating to physical conditions (e.g. a real-time location of the package or the recipient), and a schedule/calendar data store that stores data relating to the recipient's schedule, e.g. anticipated locations, and the anticipated delivery schedule of the package. The data can be stored in a variety of forms, such as in a secure blockchain is supported by a decentralized blockchain network.

In one example, the intermediary shipper devices 120 are associated with one or more carriers in a shipping route for the package from the sender associated with sender device 110 to a recipient associated with recipient device 130. Intermediary shipper device 120A can be associated with a first local Shipper for picking up the package to be shipped from the sender associated with the sender device 110. Intermediary Shipper device 120B can be associated with a long distance shipper who will transship the package from the sender's locale to the recipient's locale. Intermediary Shipper device 120C is associated with a second local Shipper for delivering the package to recipient associated with the recipient device 130.

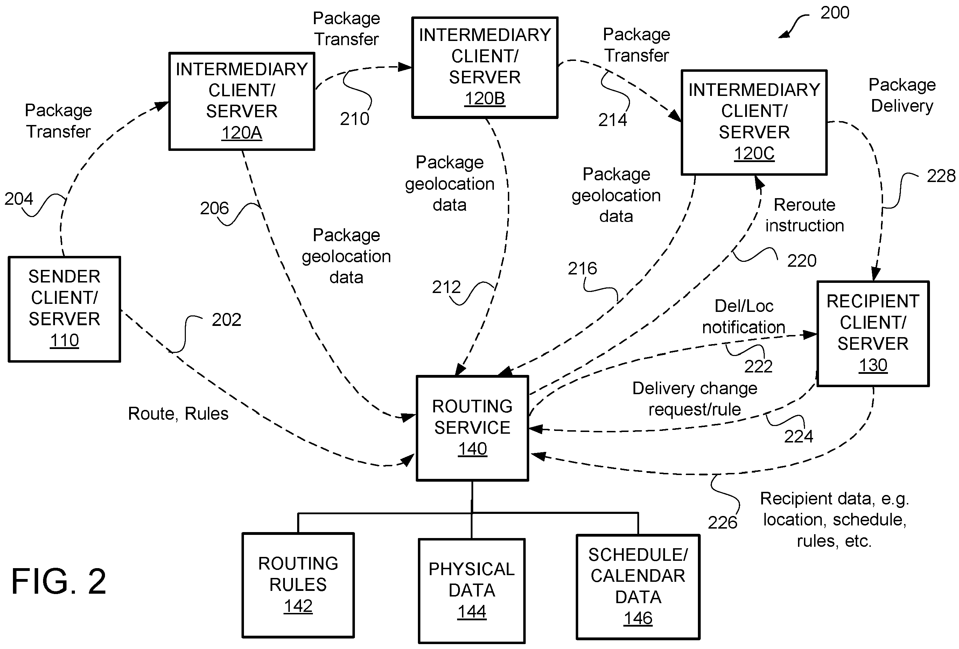

FIGURE 2 is a data architecture diagram illustrating one example of data flows 200 involving rules and current or anticipated physical conditions for shipment of a package from a sender to a recipient. In this example, at 202, a sender utilizes sender device 110 to select a shipping route and, in some examples, define delivery rules, e.g. package must be delivered to the recipient in person, which are stored in routing rules store 142. The shipping route, in this example, defines all the shippers involved with shipment of a specific package from the sender to recipient.

In addition, recipient client/server 130 sends recipient data and rules to routing service 140. For example, the recipient data can include real-time data regarding a geolocation of the recipient that is stored in physical data store 144. The recipient data can also include scheduling data, such as calendar data, e.g. recipient plans to be at a defined location at a defined time and date, that is stored in schedule/calendar data store 146.

The recipient can also define rules regarding delivery of the package that are stored in routing rules 142. For example, the recipient can define a rule that directs a package arriving between 9 AM and 5PM is to be delivered to a first geolocation, e.g. a work address. Another rule can direct a package arriving after 6PM to be delivered to a second geolocation, e.g. a home address. Yet another rule can direct that a package arriving during a defined calendar period, e.g. vacation, to be delivered to a third geolocation, e.g. a neighbor's home address or the address of a vacation home.

In general terms, a rule specifies one or more current or anticipated physical conditions and an action, where the action is triggered when the one or more conditions are satisfied. Physical conditions can have a temporal component. Rules can also be defined for the sender and intermediate shippers. Also note that rules can be added, deleted or modified while a package is in-transit. In some implementations, different rules can have different priority or weighting levels that can be considered during routing.

In this example, at 204, the package is shipped, e.g. a first shipper picks up the package from the sender. Each of the intermediary devices 120 can provide physical data regarding the package, such as geolocation at a date and time and other data indicating current and anticipated locations, handoffs or delivery for the package, which can be stored in physical data store 144. Similarly, physical data for the recipient, such as real-time location data, can be received from recipient device 130 (e.g., recipient's cell phone) and stored in physical data store 144. In some examples, physical data for the sender can be received from sender client/server 110 to facilitate package pickup. The geolocation data can be obtained from a variety of suitable sources, such as GPS data on a device, cell tower location data, etc., that can sufficiently identify a location of the package or the recipient.

At 206, intermediary client/server 120A associated with a first shipper sends geolocation data for the package to routing service 140. For example, intermediary client/server 120A sends geolocation and status data to routing service 140 when the package is picked up from the sender at 204, reports time and location of the package while in the possession of the first shipper, and reports the projected time and location that the package will be transferred to a second shipper at 210, the projected date and time that the package will be delivered to the final location as well as the actual time and status when the package is transferred to a second shipper at 210. Similarly, other intermediary client/server 120 can provide this information to the routing service 140 to facilitate in-transit rerouting actions, such as an in-transit rerouting request from the recipient.

Similarly, at 212, intermediary client/server 120B associated with the second shipper sends geolocation data for the package to routing service 140. For example, intermediary client/server 120B sends geolocation and status data when the package is received from the first shipper at 210, reports time and location of the package while in the possession of the second shipper, and reports the location, time and status when the package is transferred to a third shipper at 214.

Likewise, at 216, intermediary client/server 120C associated with the third shipper sends geolocation data for the package to routing service 140. For example, intermediary client/server 120C sends geolocation and status data when the package is received from the second shipper at 214, reports time and location of the package while in the possession of the third shipper, and reports the location, time and status when the package is delivered to a third shipper at 214.

At multiple points in the shipping process, e.g. each time that physical data for the package is sent to routing service 140, routing rules from store 142 can be applied to the current or anticipated physical conditions of the package. If the physical conditions satisfy a rule to which they are applied, then an action can be triggered, e.g. a reroute instruction or a notification can be triggered.

In the example of FIGURE 2, package geolocation data sent to routing service 140 at 216 can result in a rule triggering an action. In one example, the time and geolocation reported at 216 triggers a rule to generate a reroute instruction to intermediary client/server 120C at 220. For example, the time and geolocation of the package indicate that the package is anticipated to arrive after 6 PM, so the rule triggers reroute instruction 220 to intermediary client/server 120C to redirect delivery of the package to the recipient's home street address, at 228. Similarly, if the recipient learns of the actual or projected geolocation of the package from routing service 140 and decides to re-route the package based on another reason, she may provide the updated request to have the package re-routed.

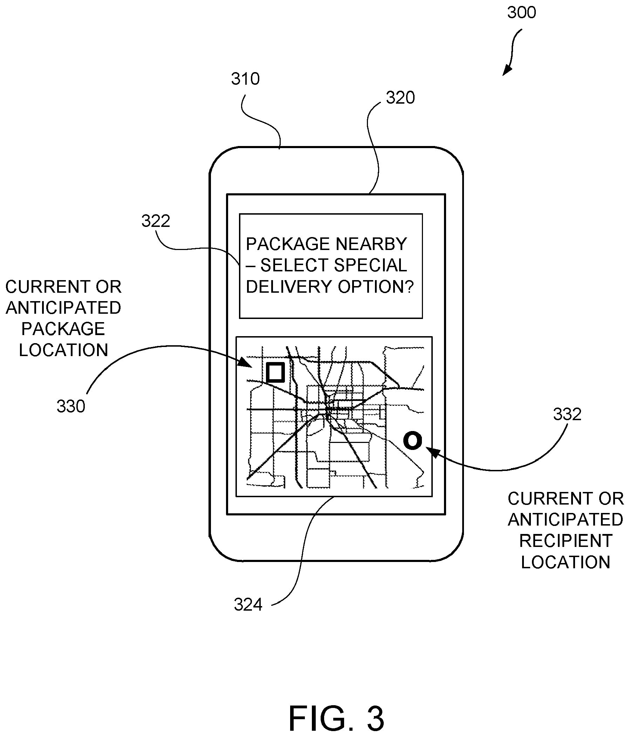

In another example, a rule detects that the current geolocation of the package reported at 216 is within a threshold distance of the recipient's current or anticipated geolocation, as reported at 226, and triggers generation of a delivery notification message for recipient client/server 130, at 222, that offers to deliver the package to the recipient at their current or anticipated geolocation. For example, a recipient can receive the delivery notification on first display region 322 of touchscreen display 324 in FIGURE 3 along with a special delivery option.

At 224, the recipient responds to the offer at 222 by sending a delivery change request at 224 that results in reroute instruction 220 directing intermediary client/server 120C to deliver the package to the recipient's current or anticipated geolocation. For example, the recipient can select the special delivery option by a touch input in first display/input region 322 of touchscreen display 324 selecting the special delivery option.

In yet another example, current or anticipated package geolocation data based on package geolocation data from intermediary client/servers 120 triggers a location notification message for recipient client/server 130, at 222, that notifies the recipient of the current or anticipated package geolocation or projected delivery time. For example, the notification and associated current or anticipated location, delivery or handoff information can be displayed to the recipient, e.g. on second display region 324 of touchscreen display 320. The recipient can input a rerouting request to an alternate location, e.g. a business or vacation travel location, using first display/input region 322.

At 224, in this example, the rerouting request entered by the recipient is sent to routing service 130 that results in reroute instruction 220 directing intermediary client/server 120C to deliver the package to the alternate location defined in the recipient's reroute request. For example, the reroute request can be added as a new routing rule for the package in routing rules store 142 of routing service 140. The new routing rule can be triggered when the routing rules are applied to the in-transit package.

FIGURE 3 is a schematic diagram illustrating an example of a user interface 300 on a recipient client server device 310 for notification of a recipient. A touchscreen display 320 of client/server device 310 displays a text message in a first display region 322 that indicates that the package is nearby and offering a special delivery option.

A second display region 324 displays a map illustrating a current or anticipated package location 330 and a current or anticipated recipient location 332. The recipient can touch the first display region 322, which operates as a touch input activation button, to select the special delivery option, which results in a reroute message being sent to an intermediary client/server 120, which can have a similar user interface for displaying reroute directions to a shipping agent using the client/server 120. The rule can be defined such that selection of the special delivery option generates a special delivery charge to the recipient.

In some examples, geolocation data and rules pertaining to a sender device 110 can be stored and utilized for pickup routing, e.g. a delivery truck for a pickup shipper is in a certain proximity to the sender and can pickup the package. A rule can be defined that triggers a notification to the sender when the delivery truck is nearby using a user interface similar to the example of FIGURE 3. In this case, a notification in first region 322 offers a pickup option that the sender can accept by activating first region 322, which causes a reroute notification to be sent to an intermediary client/server 120 to notify a shipping agent to reroute to the sender's location to pickup the package.

The disclosed technology is highly flexible and versatile and can used to provide a wide range of rerouting and delivery options based on rules defined to trigger based on current or anticipated physical conditions pertaining to the sender, shippers or recipient.

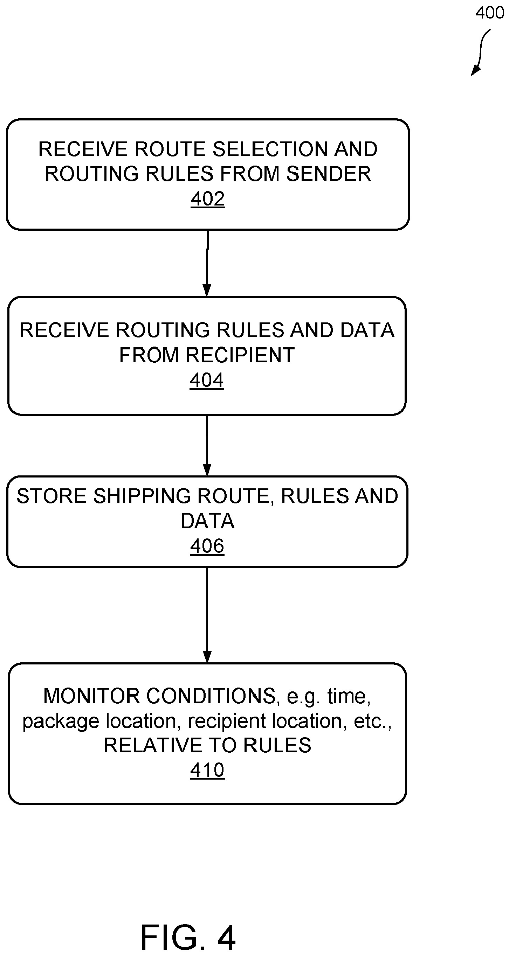

FIGURE 4 is a control flow diagram illustrating an example of a process in a routing service, such as routing service 140, in accordance with certain aspects of the disclosed technology. In this example, at 402, the routing service 140 receives a route selection from sender device 110 along with one or more routing rules defined by the sender that are stored in rules store 142. The sender can also provide physical condition data, such as time and geolocation, to routing service 140 that are stored in physical data store 144. In addition, the sender can provide schedule data, e.g. the sender's business hours, that is stored in schedule/calendar store 146.

At 404, routing service 140 receives routing rules from the recipient, which are stored in rules store 142. The recipient can also provide physical condition data, such as time and geolocation, to routing service 140 that are stored in physical data store 144 and schedule data that is stored in schedule/calendar store 146. As an example, the recipient may define the shipping route or the sender and recipient collaborate to define the shipping route.

At 406, the selected shipping route, the routing rules and associated data are stored by routing service 140. At 410, routing service 140 monitors the current conditions, e.g. time of day, current or anticipated package location, current or anticipated recipient location, relative to the rules to determine if the conditions of a routing rule are satisfied to trigger an action defined in the rule. The monitoring process 410 can be configured to occur periodically, when a physical condition changes, when a message is received by routing service 140, when a rule is added to rules store 142, or a combination of these approaches or other design approaches as are suited to or desired for a particular application of the disclosed technology.

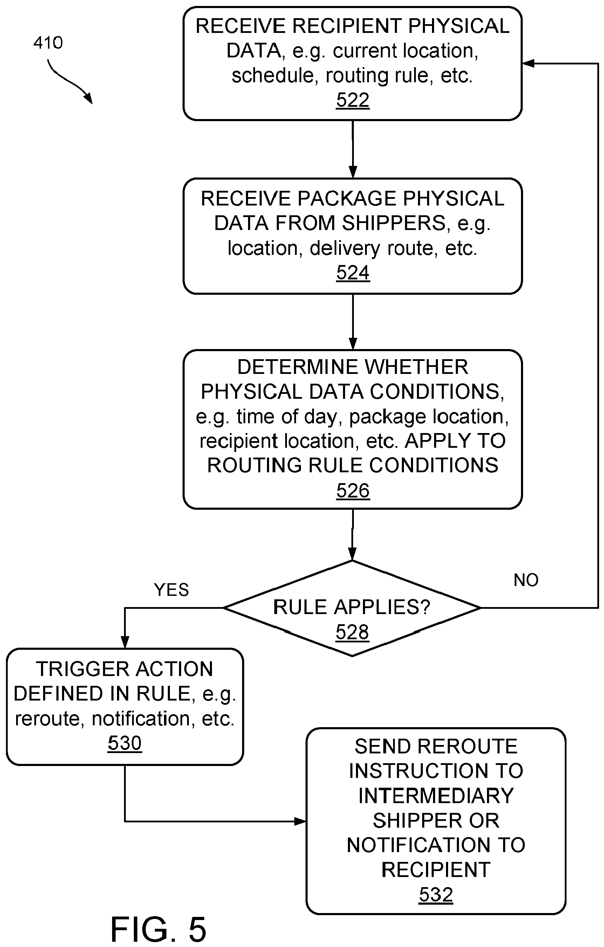

FIGURE 5 is a control flow diagram illustrating one example of an implementation of the monitoring process 410 of FIGURE 4 in the routing service 140. In this example, recipient physical data, such as current location, schedule, routing rules, etc., are received at 522. At 524, physical data regarding the package data, such as location and delivery route information, is received from shippers in the shipping route. At 526, a determination is made based on the received physical data as to whether a routing rule applies based on the current conditions, e.g. the time of day, package location, recipient location, etc.

If no routing rule applies under the current conditions, then control branches at 528 back to 522 to continue monitoring the current physical data. However, if a routing rule does apply, then control branches at 528 to 530, where an action defined for the rule is triggered because the conditions defined in the rule have been satisfied. For example, the triggered action can be reroute instruction to a shipper or a notification to the recipient, at 532.

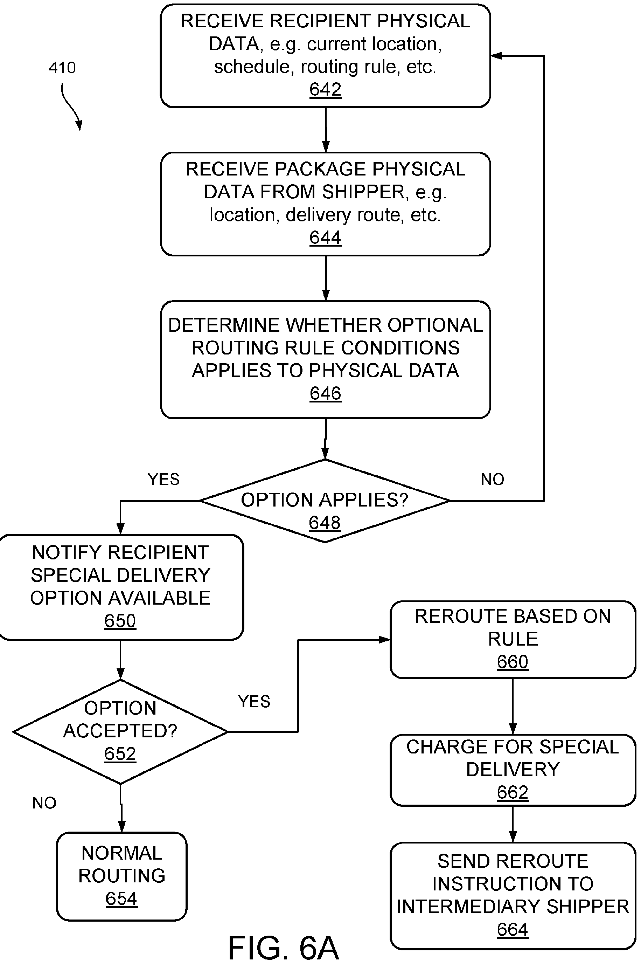

FIGURE 6A is a control flow diagram illustrating yet another example of an implementation of the monitoring process 410 in the routing service 140 that relates to an optional routing rule, such as the special delivery option scenario discussed above with respect to FIGURE 3. Similar to the process in FIGURE 5, recipient physical data is received at 652 and package physical data is received at 644.

At 646, a determination is made as to whether the conditions defined in the optional routing rule apply to the physical data. If the conditions for the rule are not satisfied by the physical data, then control branches at 648 to 652 to continue monitoring the physical data for the recipient and the package.

If the conditions for the rule are satisfied by the physical data, then control branches at 648 to 650. In this example, the action defined for the optional rule is to send a notification to the recipient, e.g. recipient client/server 130, indicating the package is nearby and offering a special delivery option, e.g. a notification is sent to the recipient device that causes a special delivery option to be presented to the recipient, such as by using the user interface illustrated in FIGURE 3. If the option is not accepted, control branches at 652 to 654 and normal routing of the package in accordance with the defined shipping route continues.

If the special delivery option is accepted, control branches at 652 to 660 to format a reroute instruction with the recipient's current geolocation. At 662, the recipient is charged for the special delivery. At 664, the reroute instruction is sent to the intermediary client/server 120 of the shipping agent currently in possession of the package.

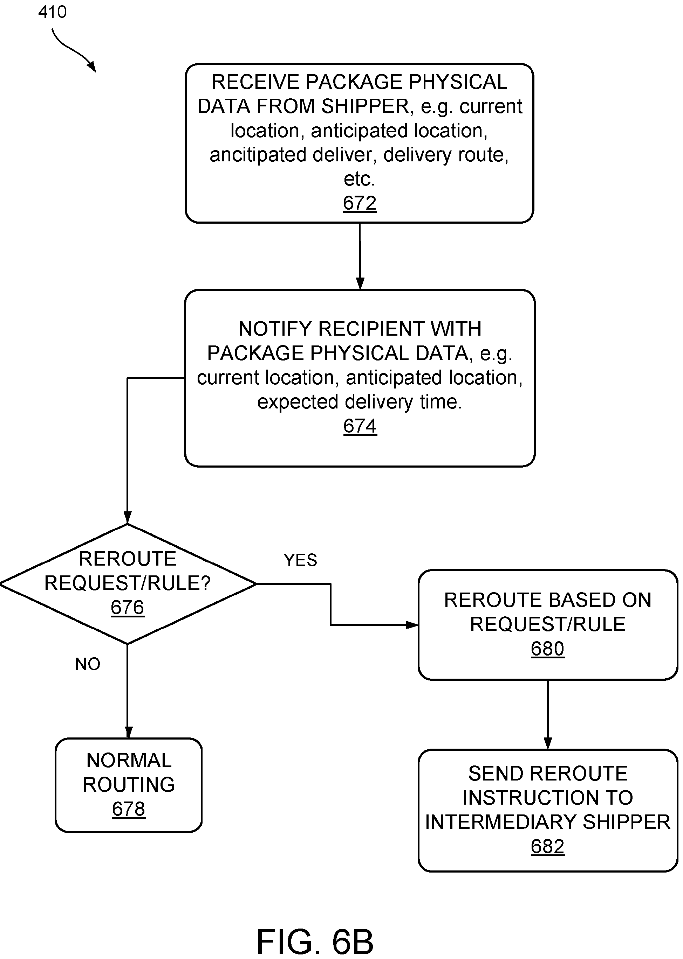

FIGURE 6B is a control flow diagram showing yet another illustrative example of an implementation of a monitoring process in a routing service 140 that relates to a recipient rerouting request or rule. Similar to the processes in FIGURES 5 and 6A, in-transit package physical data, such as current or anticipated geolocation, delivery time, or shipping route, is received at 672.

Note that in some implementations, the anticipated data can be determined by the routing service 140 based on current physical data regarding an in-transit package received from intermediary client/servers 120. For example, routing service 140 can perform predictive modeling based on physical data from intermediary client/server 120 to determine an anticipated location or delivery time for an in-transit package. In other examples, some predictive modeling can be applied within the intermediary client/servers 120 and provided to routing service 140. A variety of approaches to determining anticipated locations and delivery times can be utilized with the disclosed technology.

In this example, at 674, the recipient is notified regarding the in-transit package physical data, such as the current geolocation, anticipated geolocation, or delivery time for the in-transit package. For example, as discussed above with respect to FIGURE 2, a location notification message can be send to recipient client/server 130, at 222, that includes the current or anticipated package geolocation or projected delivery time for display to the recipient on second display region 324 of touchscreen display 320.

At 676, the recipient can input a rerouting request to a different location. For example, as noted above, the recipient can input an alternate location using first display/input region 322 of touchscreen display 320 and, at 224, the rerouting request or rule with the alternate location entered by the recipient can be sent to routing service 130. If no reroute request or rule is received, then control branches at 676 to 678 for continuation of normal routing of the in-transit package.

If a rerouting request or rule is received from the recipient, then control branches at 676 to 680 to reroute the in-transit package based on the received request or rule. For example, the reroute request can be added as a new routing rule for the package in routing rules store 142 of routing service 140 that is triggered when the routing rules are applied to the in-transit package. The reroute request can also result in determining a new route for the in-transit package to the alternate location, e.g. routing service 140 calculates a new route for the package that is stored in routing rules store 142.

At 682, the reroute request or rule results in a reroute instruction being sent to one or more of intermediary client/servers 120 to deliver the package to the alternate location defined by the recipient. For example, a reroute request or rule received at 224 can result in reroute instruction 220 to intermediary client/server 120C to route the in-transit package to the alternate location defined in the recipient's reroute request, e.g. to another intermediary client/server 120 in a route to the alternate location.

Note that aspects of the monitoring processes of FIGURES 5, 6A and-6B can be combined or integrated to provide a highly flexible and responsive approach to dynamic routing of an in-transit package.

Also note that the processes of FIGURES 4, 5, 6A and-6B can be adapted to apply to picking up a package from the sender. As described above, the sender can be notified that a delivery truck is nearby and immediate package pickup is available for fee. The disclosed technology can be adapted to provide a variety of routing services using routing rules based on physical conditions, such as current and anticipated location of the package, the recipient, the sender or the shippers in the shipping route for the package.

Various implementations for routing and obtaining physical data are compatible with the disclosed technology. For example, either a routing service 140 or a service residing in sender device 110 can maintain routing rules in rules store 142 and scheduling data in schedule/calendar store 146 and collect and monitor physical data in physical data store 144. Note that a geolocation address need not be a specific street address, but can be a more general location or identifier, such as a town, postal code, carrier, building, company, institution or organization.

A technical advantage of the disclosed technology is that a wide variety of routing decisions of varying complexity can be made based on physical status data regarding the package, the recipient or the shippers in the shipping route. It will be readily appreciated that the disclosed technology enables complex and sophisticated routing rules based on physical conditions data to be defined and applied to the routing of specific items or packages. Many variations can be implemented that differ from the examples illustrated or go beyond the examples illustrated.

The routing rules illustrated above can be defined and determined in a variety of ways. For example, a seller user with administrative permissions can define routing rules for items sent by the seller. In another example, routing rules are defined by a recipient for application to packages that are sent to the recipient. In yet another example, an administrative user for routing service 140 can define routing rules. In still other examples, an administrative user for a shipper can define route rules for items handled by the shipper, such as dynamically rerouting a package to a nearby facility of the shipper or to another shipper.

In addition to the examples above, current physical conditions can include weather conditions, equipment availability, pricing, delivery time, time in transit, physical condition of item, time that the item has been above a threshold temperature or humidity, etc., and these conditions can be utilized in a routing rule to dynamically reroute a package.

The examples of FIGURES 1-6 illustrate a variety of approaches to dynamically rerouting an item or package during shipment based on physical conditions in accordance with certain aspects of the disclosed technology. It will be readily understood that other approaches can be utilized in accordance with the disclosed technology. Note that the disclosed technology can be implemented in varying ways to suit a particular implementation or design without departing from the teachings of the disclosed technology.

It should be appreciated that the processes shown above are examples and a variety of other approaches may be utilized without departing from the disclosed technology.

The present techniques may involve operations occurring in one or more machines. As used herein, "machine" means physical data-storage and processing hardware programed with instructions to perform specialized computing operations. It is to be understood that two or more different machines may share hardware components. For example, the same integrated circuit may be part of two or more different machines.

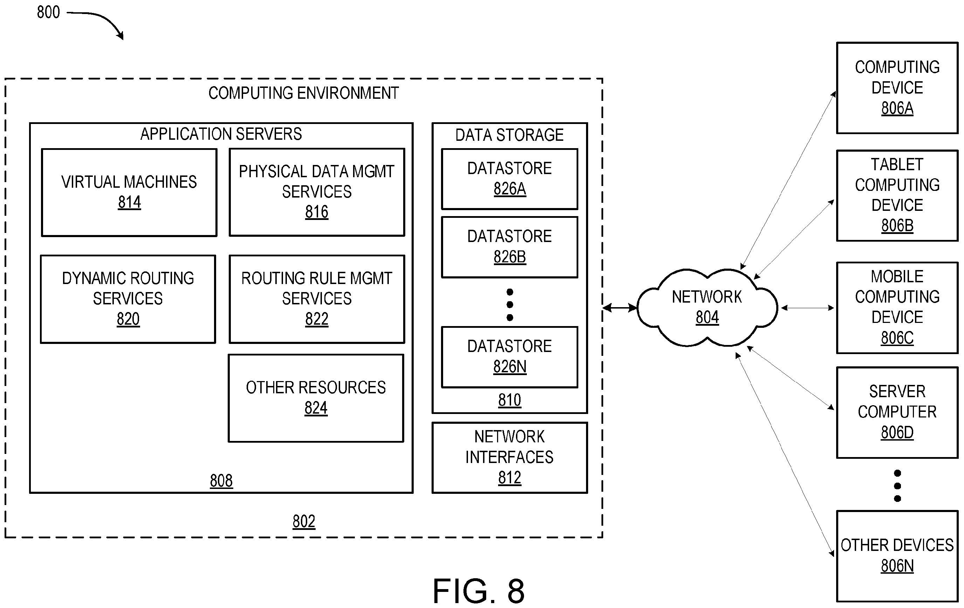

Note that at least parts of processes of FIGURES 4-6, smart contract and other processes and operations pertaining to dynamic rerouting based on physical conditions described herein may be implemented in one or more servers, such as computer environment 800 in FIGURE 8, or the cloud, and data defining the results of user control input signals translated or interpreted as discussed herein may be communicated to a user device for display. Alternatively, the dynamic rerouting based on physical conditions processes may be implemented in a client device. In still other examples, some operations may be implemented in one set of computing resources, such as servers, and other steps may be implemented in other computing resources, such as a client device.

It should be understood that the methods described herein can be ended at any time and need not be performed in their entireties. Some or all operations of the methods described herein, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

As described herein, in conjunction with the FIGURES described herein, the operations of the routines (e.g. processes of FIGURES 4-6) are described herein as being implemented, at least in part, by an application, component, and/or circuit. Although the following illustration refers to the components of FIGURES 4-6, it can be appreciated that the operations of the routines may be also implemented in many other ways. For example, the routines may be implemented, at least in part, by a computer processor or a processor or processors of another computer. In addition, one or more of the operations of the routines may alternatively or additionally be implemented, at least in part, by a computer working alone or in conjunction with other software modules.

For example, the operations of routines are described herein as being implemented, at least in part, by an application, component and/or circuit, which are generically referred to herein as modules. In some configurations, the modules can be a dynamically linked library (DLL), a statically linked library, functionality produced by an application programing interface (API), a compiled program, an interpreted program, a script or any other executable set of instructions. Data and/or modules, such as the data and modules disclosed herein, can be stored in a data structure in one or more memory components. Data can be retrieved from the data structure by addressing links or references to the data structure.

Although the following illustration refers to the components of the FIGURES discussed above, it can be appreciated that the operations of the routines (e.g. processes of FIGURES 4-6) may be also implemented in many other ways. For example, the routines may be implemented, at least in part, by a processor of another remote computer or a local computer or circuit. In addition, one or more of the operations of the routines may alternatively or additionally be implemented, at least in part, by a chipset working alone or in conjunction with other software modules. Any service, circuit or application suitable for providing the techniques disclosed herein can be used in operations described herein.

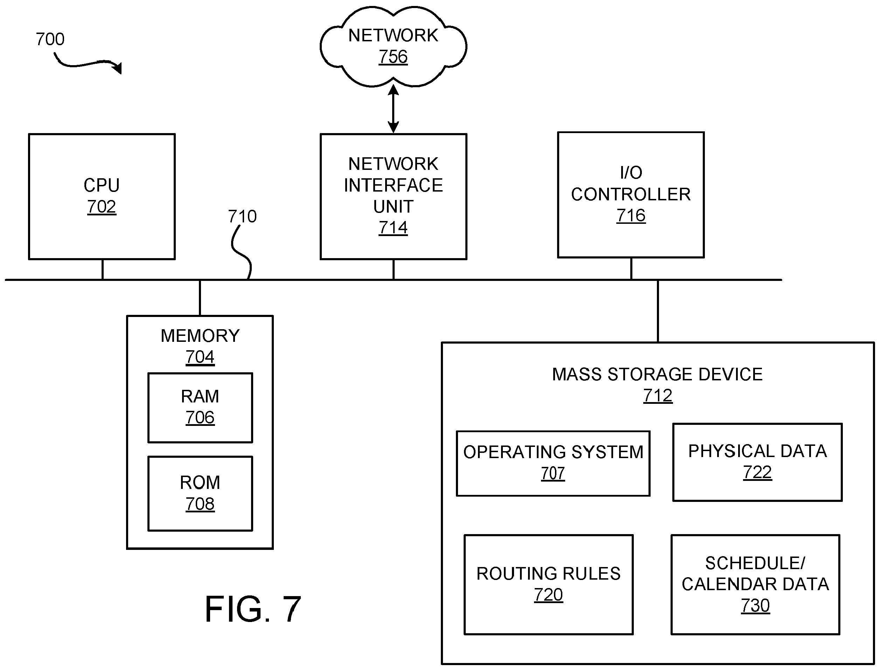

FIGURE 7 shows additional details of an example computer architecture 700 for a computer, such as the devices 110, 120A-C, 130 and 140 (FIGURE 1), capable of executing the program components described herein. Thus, the computer architecture 700 illustrated in FIGURE 7 illustrates an architecture for a server computer, mobile phone, a PDA, a smart phone, a desktop computer, a netbook computer, a tablet computer, an on-board computer, a game console, and/or a laptop computer. The computer architecture 700 may be utilized to execute any aspects of the software components presented herein.

The computer architecture 700 illustrated in FIGURE 7 includes a central processing unit 702 ("CPU"), a system memory 704, including a random access memory 706 ("RAM") and a read-only memory ("ROM") 708, and a system bus 710 that couples the memory 704 to the CPU 702. A basic input/output system containing the basic routines that help to transfer information between sub-elements within the computer architecture 700, such as during startup, is stored in the ROM 708. The computer architecture 700 further includes a mass storage device 712 for storing an operating system 707, routing rules 720, data (such as shipping data 720, physical data 722, and schedule/calendar data 730), and one or more application programs.

The mass storage device 712 is connected to the CPU 702 through a mass storage controller (not shown) connected to the bus 710. The mass storage device 712 and its associated computer-readable media provide non-volatile storage for the computer architecture 700. Although the description of computer-readable media contained herein refers to a mass storage device, such as a solid-state drive, a hard disk or CD-ROM drive, it should be appreciated by those skilled in the art that computer-readable media can be any available computer storage media or communication media that can be accessed by the computer architecture 700.

Communication media includes computer readable instructions, data structures, program modules, or other data in a modulated data signal such as a carrier wave or other transport mechanism and includes any delivery media. The term "modulated data signal" means a signal that has one or more of its characteristics changed or set in a manner so as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

By way of example, and not limitation, computer storage media may include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer architecture 700. For purposes the claims, the phrase "computer storage medium," "computer-readable storage medium" and variations thereof, does not include waves, signals, and/or other transitory and/or intangible communication media, per se.

According to various configurations, the computer architecture 700 may operate in a networked environment using logical connections to remote computers through the network 756 and/or another network (not shown). The computer architecture 700 may connect to the network 756 through a network interface unit 714 connected to the bus 710. It should be appreciated that the network interface unit 714 also may be utilized to connect to other types of networks and remote computer systems. The computer architecture 700 also may include an input/output controller 716 for receiving and processing input from a number of other devices, including a keyboard, mouse, game controller, television remote or electronic stylus (not shown in FIGURE 7). Similarly, the input/output controller 716 may provide output to a display screen, a printer, or other type of output device (also not shown in FIGURE 7).

It should be appreciated that the software components described herein may, when loaded into the CPU 702 and executed, transform the CPU 702 and the overall computer architecture 700 from a general-purpose computing system into a special-purpose computing system customized to facilitate the functionality presented herein. The CPU 702 may be constructed from any number of transistors or other discrete circuit elements, which may individually or collectively assume any number of states. More specifically, the CPU 702 may operate as a finite-state machine, in response to executable instructions contained within the software modules disclosed herein. These computer-executable instructions may transform the CPU 702 by specifying how the CPU 702 transitions between states, thereby transforming the transistors or other discrete hardware elements constituting the CPU 702.

Encoding the software modules presented herein also may transform the physical structure of the computer-readable media presented herein. The specific transformation of physical structure may depend on various factors, in different implementations of this description. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the semiconductor memory. For example, the software may transform the state of transistors, capacitors, or other discrete circuit elements constituting the semiconductor memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope and spirit of the present description, with the foregoing examples provided only to facilitate this discussion.

In light of the above, it should be appreciated that many types of physical transformations take place in the computer architecture 700 in order to store and execute the software components presented herein. It also should be appreciated that the computer architecture 700 may include other types of computing devices, including hand-held computers, embedded computer systems, personal digital assistants, and other types of computing devices known to those skilled in the art. It is also contemplated that the computer architecture 700 may not include all of the components shown in FIGURE 7, may include other components that are not explicitly shown in FIGURE 7, or may utilize an architecture completely different than that shown in FIGURE 7.

FIGURE 8 depicts an illustrative distributed computing environment 800 capable of executing the software components described herein for system level authentication utilizing service permissions bound to an item or package for a blockchain ledger. Thus, the distributed computing environment 800 illustrated in FIGURE 8 can be utilized to execute many aspects of the software components presented herein. For example, the distributed computing environment 800 can be utilized to execute one or more aspects of the software components described herein. Also, the distributed computing environment 800 may represent components of the distributed blockchain platform discussed above.

According to various implementations, the distributed computing environment 800 includes a computing environment 802 operating on, in communication with, or as part of the network 804. The network 804 may be or may include the network 856, described above. The network 804 also can include various access networks. One or more client devices 806A-806N (hereinafter referred to collectively and/or generically as "clients 806") can communicate with the computing environment 802 via the network 804 and/or other connections (not illustrated in FIGURE 8). In one illustrated configuration, the clients 806 include a computing device 806A, such as a laptop computer, a desktop computer, or other computing device; a slate or tablet computing device ("tablet computing device") 806B; a mobile computing device 806C such as a mobile telephone, a smart phone, an on-board computer, or other mobile computing device; a server computer 806D; and/or other devices 806N, which can include a hardware security module. It should be understood that any number of devices 806 can communicate with the computing environment 802. Two example computing architectures for the devices 806 are illustrated and described herein with reference to FIGURES 7 and 8. It should be understood that the illustrated devices 806 and computing architectures illustrated and described herein are illustrative only and should not be construed as being limited in any way.

In the illustrated configuration, the computing environment 802 includes application servers 808, data storage 810, and one or more network interfaces 812. According to various implementations, the functionality of the application servers 808 can be provided by one or more server computers that are executing as part of, or in communication with, the network 804. The application servers 808 can host various services, virtual machines, portals, and/or other resources. In the illustrated configuration, the application servers 808 host one or more virtual machines 814 for hosting applications or other functionality. According to various implementations, the virtual machines 814 host one or more applications and/or software modules for a data management blockchain ledger. It should be understood that this configuration is illustrative only and should not be construed as being limiting in any way.

The application servers 808 can also host dynamic routing services module 820, such as those described with respect to sender client/server 110 or routing service 140 of FIGURES 1 and 2. Routing information data management services module 820 can obtain routing rules maintained by routing rule management services 822 and apply the routing rules to physical data managed by physical data management service 816 responsive to requests from entities executing in virtual machines 814. Physical data management services module 816 may collect physical data relating to physical conditions of an item or package, sender, recipient or shipping infrastructure.

As shown in FIGURE 8, the application servers 808 also can host other services, applications, portals, and/or other resources ("other resources") 824. The other resources 824 can include, but are not limited to, authentication, data encryption, data sharing, or any other functionality.

As mentioned above, the computing environment 802 can include data storage 810. According to various implementations, the functionality of the data storage 810 is provided by one or more databases or data stores operating on, or in communication with, the network 804. The functionality of the data storage 810 also can be provided by one or more server computers configured to host data for the computing environment 802. The data storage 810 can include, host, or provide one or more real or virtual data stores 826A-826N (hereinafter referred to collectively and/or generically as "datastores 826"). The datastores 826 are configured to host data used or created by the application servers 808 and/or other data. Aspects of the datastores 826 may be associated with services for routing information blockchain. Although not illustrated in FIGURE 8, the datastores 826 also can host or store web page documents, word documents, presentation documents, data structures, algorithms for execution by a recommendation engine, and/or other data utilized by any application program or another module.

The computing environment 802 can communicate with, or be accessed by, the network interfaces 812. The network interfaces 812 can include various types of network hardware and software for supporting communications between two or more computing devices including, but not limited to, the clients 806 and the application servers 808. It should be appreciated that the network interfaces 812 also may be utilized to connect to other types of networks and/or computer systems.

It should be understood that the distributed computing environment 800 described herein can provide any aspects of the software elements described herein with any number of virtual computing resources and/or other distributed computing functionality that can be configured to execute any aspects of the software components disclosed herein. According to various implementations of the concepts and technologies disclosed herein, the distributed computing environment 800 may provide the software functionality described herein as a service to the clients using devices 806. It should be understood that the devices 806 can include real or virtual machines including, but not limited to, server computers, web servers, personal computers, mobile computing devices, smart phones, and/or other devices, which can include user input devices. As such, various configurations of the concepts and technologies disclosed herein enable any device configured to access the distributed computing environment 800 to utilize the functionality described herein for creating and supporting dynamic rerouting based on physical conditions, among other aspects.

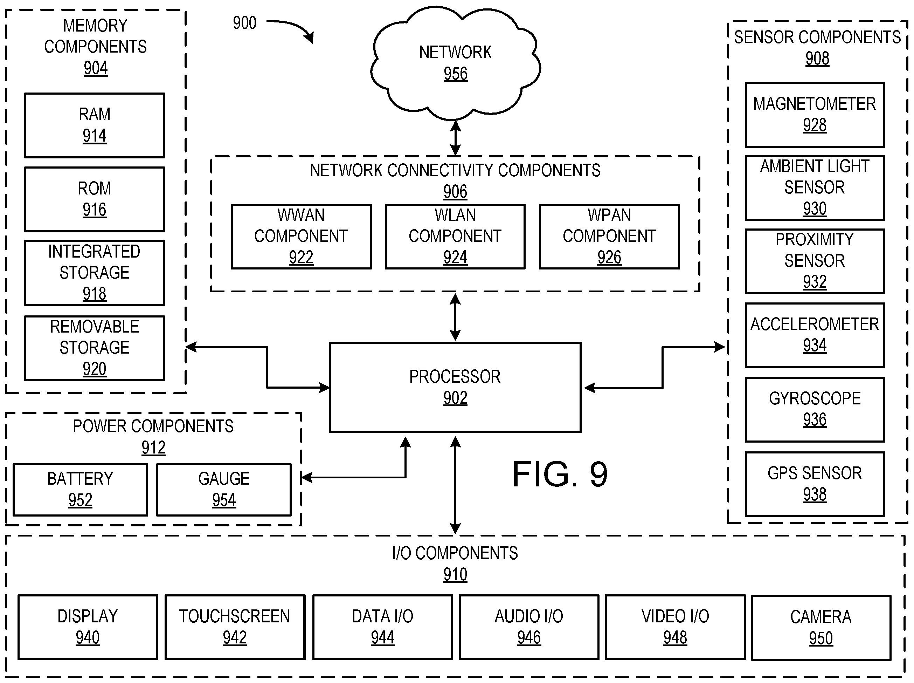

Turning now to FIGURE 9, an illustrative computing device architecture 900 for a computing device that is capable of executing various software components is described herein for supporting a blockchain ledger and applying routing information to the blockchain ledger. The computing device architecture 900 is applicable to computing devices that can manage a blockchain ledger. In some configurations, the computing devices include, but are not limited to, mobile telephones, on-board computers, tablet devices, slate devices, portable video game devices, traditional desktop computers, portable computers (e.g., laptops, notebooks, ultra-portables, and netbooks), server computers, game consoles, and other computer systems. The computing device architecture 900 is applicable to the Sender client/server 110, client/servers 120A-C, routing service 140, and recipient client/server 130 shown in FIGURE 1 and computing device 806A-N shown in FIGURE 8.

The computing device architecture 900 illustrated in FIGURE 9 includes a processor 902, memory components 904, network connectivity components 906, sensor components 908, input/output components 910, and power components 912. In the illustrated configuration, the processor 902 is in communication with the memory components 904, the network connectivity components 906, the sensor components 908, the input/output ("I/O") components 910, and the power components 912. Although no connections are shown between the individual components illustrated in FIGURE 9, the components can interact to carry out device functions. In some configurations, the components are arranged so as to communicate via one or more busses (not shown).

The processor 902 includes a central processing unit ("CPU") configured to process data, execute computer-executable instructions of one or more application programs, and communicate with other components of the computing device architecture 900 in order to perform various functionality described herein. The processor 902 may be utilized to execute aspects of the software components presented herein and, particularly, those that utilize, at least in part, secure data.

In some configurations, the processor 902 includes a graphics processing unit ("GPU") configured to accelerate operations performed by the CPU, including, but not limited to, operations performed by executing secure computing applications, general-purpose scientific and/or engineering computing applications, as well as graphics-intensive computing applications such as high resolution video (e.g., 620P, 1080P, and higher resolution), video games, three-dimensional ("3D") modeling applications, and the like. In some configurations, the processor 902 is configured to communicate with a discrete GPU (not shown). In any case, the CPU and GPU may be configured in accordance with a co-processing CPU/GPU computing model, wherein a sequential part of an application executes on the CPU and a computationally-intensive part is accelerated by the GPU.

In some configurations, the processor 902 is, or is included in, a system-on-chip ("SoC") along with one or more of the other components described herein below. For example, the SoC may include the processor 902, a GPU, one or more of the network connectivity components 906, and one or more of the sensor components 908. In some configurations, the processor 902 is fabricated, in part, utilizing a package-on-package ("PoP") integrated circuit packaging technique. The processor 902 may be a single core or multi-core processor.

The processor 902 may be created in accordance with an ARM architecture, available for license from ARM HOLDINGS of Cambridge, United Kingdom. Alternatively, the processor 902 may be created in accordance with an x86 architecture, such as is available from INTEL CORPORATION of Mountain View, California and others. In some configurations, the processor 902 is a SNAPDRAGON SoC, available from QUALCOMM of San Diego, California, a TEGRA SoC, available from NVIDIA of Santa Clara, California, a HUMMINGBIRD SoC, available from SAMSUNG of Seoul, South Korea, an Open Multimedia Application Platform ("OMAP") SoC, available from TEXAS INSTRUMENTS of Dallas, Texas, a customized version of any of the above SoCs, or a proprietary SoC.

The memory components 904 include a random access memory ("RAM") 914, a read-only memory ("ROM") 916, an integrated storage memory ("integrated storage") 918, and a removable storage memory ("removable storage") 920. In some configurations, the RAM 914 or a portion thereof, the ROM 916 or a portion thereof, and/or some combination of the RAM 914 and the ROM 916 is integrated in the processor 902. In some configurations, the ROM 916 is configured to store a firmware, an operating system or a portion thereof (e.g., operating system kernel), and/or a bootloader to load an operating system kernel from the integrated storage 918 and/or the removable storage 920.

The integrated storage 918 can include a solid-state memory, a hard disk, or a combination of solid-state memory and a hard disk. The integrated storage 918 may be soldered or otherwise connected to a logic board upon which the processor 902 and other components described herein also may be connected. As such, the integrated storage 918 is integrated in the computing device. The integrated storage 918 is configured to store an operating system or portions thereof, application programs, data, and other software components described herein.

The removable storage 920 can include a solid-state memory, a hard disk, or a combination of solid-state memory and a hard disk. In some configurations, the removable storage 920 is provided in lieu of the integrated storage 918. In other configurations, the removable storage 920 is provided as additional optional storage. In some configurations, the removable storage 920 is logically combined with the integrated storage 918 such that the total available storage is made available as a total combined storage capacity. In some configurations, the total combined capacity of the integrated storage 918 and the removable storage 920 is shown to a user instead of separate storage capacities for the integrated storage 918 and the removable storage 920.

The removable storage 920 is configured to be inserted into a removable storage memory slot (not shown) or other mechanism by which the removable storage 920 is inserted and secured to facilitate a connection over which the removable storage 920 can communicate with other components of the computing device, such as the processor 902. The removable storage 920 may be embodied in various memory card formats including, but not limited to, PC card, CompactFlash card, memory stick, secure digital ("SD"), miniSD, microSD, universal integrated circuit card ("UICC") (e.g., a subscriber identity module ("SIM") or universal SIM ("USIM")), a proprietary format, or the like.

It can be understood that one or more of the memory components 904 can store an operating system. According to various configurations, the operating system may include, but is not limited to, server operating systems such as various forms of UNIX certified by The Open Group and LINUX certified by the Free Software Foundation, or aspects of Software-as-a-Service (SaaS) architectures, such as MICROSOFT AZURE from Microsoft Corporation of Redmond, Washington or AWS from Amazon Corporation of Seattle, Washington. The operating system may also include WINDOWS MOBILE OS from Microsoft Corporation of Redmond, Washington, WINDOWS PHONE OS from Microsoft Corporation, WINDOWS from Microsoft Corporation, MAC OS or IOS from Apple Inc. of Cupertino, California, and ANDROID OS from Google Inc. of Mountain View, California. Other operating systems are contemplated.

The network connectivity components 906 include a wireless wide area network component ("WWAN component") 922, a wireless local area network component ("WLAN component") 924, and a wireless personal area network component ("WPAN component") 926. The network connectivity components 906 facilitate communications to and from the network 956 or another network, which may be a WWAN, a WLAN, or a WPAN. Although only the network 956 is illustrated, the network connectivity components 906 may facilitate simultaneous communication with multiple networks, including the network 956 of FIGURE 9. For example, the network connectivity components 906 may facilitate simultaneous communications with multiple networks via one or more of a WWAN, a WLAN, or a WPAN.

The network 956 may be or may include a WWAN, such as a mobile telecommunications network utilizing one or more mobile telecommunications technologies to provide voice and/or data services to a computing device utilizing the computing device architecture 900 via the WWAN component 922. The mobile telecommunications technologies can include, but are not limited to, Global System for Mobile communications ("GSM"), Code Division Multiple Access ("CDMA") ONE, CDMA7000, Universal Mobile Telecommunications System ("UMTS"), Long Term Evolution ("LTE"), and Worldwide Interoperability for Microwave Access ("WiMAX"). Moreover, the network 956 may utilize various channel access methods (which may or may not be used by the aforementioned standards) including, but not limited to, Time Division Multiple Access ("TDMA"), Frequency Division Multiple Access ("FDMA"), CDMA, wideband CDMA ("W-CDMA"), Orthogonal Frequency Division Multiplexing ("OFDM"), Space Division Multiple Access ("SDMA"), and the like. Data communications may be provided using General Packet Radio Service ("GPRS"), Enhanced Data rates for Global Evolution ("EDGE"), the High-Speed Packet Access ("HSPA") protocol family including High-Speed Downlink Packet Access ("HSDPA"), Enhanced Uplink ("EUL") or otherwise termed High-Speed Uplink Packet Access ("HSUPA"), Evolved HSPA ("HSPA+"), LTE, and various other current and future wireless data access standards. The network 956 may be configured to provide voice and/or data communications with any combination of the above technologies. The network 956 may be configured to or be adapted to provide voice and/or data communications in accordance with future generation technologies.

In some configurations, the WWAN component 922 is configured to provide dual- multi-mode connectivity to the network 956. For example, the WWAN component 922 may be configured to provide connectivity to the network 956, wherein the network 956 provides service via GSM and UMTS technologies, or via some other combination of technologies. Alternatively, multiple WWAN components 922 may be utilized to perform such functionality, and/or provide additional functionality to support other non-compatible technologies (i.e., incapable of being supported by a single WWAN component). The WWAN component 922 may facilitate similar connectivity to multiple networks (e.g., a UMTS network and an LTE network).

The network 956 may be a WLAN operating in accordance with one or more Institute of Electrical and Electronic Engineers ("IEEE") 802.11 standards, such as IEEE 802.11a, 802.11b, 802.11g, 802.11n, and/or future 802.11 standard (referred to herein collectively as WI-FI). Draft 802.11 standards are also contemplated. In some configurations, the WLAN is implemented utilizing one or more wireless WI-FI access points. In some configurations, one or more of the wireless WI-FI access points are another computing device with connectivity to a WWAN that are functioning as a WI-FI hotspot. The WLAN component 924 is configured to connect to the network 956 via the WI-FI access points. Such connections may be secured via various encryption technologies including, but not limited to, WI-FI Protected Access ("WPA"), WPA2, Wired Equivalent Privacy ("WEP"), and the like.

The network 956 may be a WPAN operating in accordance with Infrared Data Association ("IrDA"), BLUETOOTH, wireless Universal Serial Bus ("USB"), Z-Wave, ZIGBEE, or some other short-range wireless technology. In some configurations, the WPAN component 926 is configured to facilitate communications with other devices, such as peripherals, computers, or other computing devices via the WPAN.

The sensor components 908 include a magnetometer 928, an ambient light sensor 930, a proximity sensor 932, an accelerometer 934, a gyroscope 936, and a Global Positioning System sensor ("GPS sensor") 938. It is contemplated that other sensors, such as, but not limited to, temperature sensors or shock detection sensors, also may be incorporated in the computing device architecture 900.

The I/O components 910 include a display 940, a touchscreen 942, a data I/O interface component ("data I/O") 944, an audio I/O interface component ("audio I/O") 946, a video I/O interface component ("video I/O") 948, and a camera 950. In some configurations, the display 940 and the touchscreen 942 are combined. In some configurations two or more of the data I/O component 944, the audio I/O component 946, and the video I/O component 948 are combined. The I/O components 910 may include discrete processors configured to support the various interfaces described below or may include processing functionality built-in to the processor 902.

The illustrated power components 912 include one or more batteries 952, which can be connected to a battery gauge 954. The batteries 952 may be rechargeable or disposable. Rechargeable battery types include, but are not limited to, lithium polymer, lithium ion, nickel cadmium, and nickel metal hydride. Each of the batteries 952 may be made of one or more cells.

The power components 912 may also include a power connector, which may be combined with one or more of the aforementioned I/O components 910. The power components 912 may interface with an external power system or charging equipment via an I/O component.

### Examples of Various Implementations

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

The present disclosure is made in light of the following clauses:
Clause 1: A computer-implemented method for dynamically rerouting a package during shipment, the method comprising: receiving a shipping route for shipping a package to a recipient; receiving one or more rules for rerouting the package, wherein said rules may be based on physical conditions; monitoring physical conditions relating to the package and physical conditions relating to the recipient; determining whether one of the rules for rerouting applies to the physical conditions relating to the package and physical conditions relating to the recipient; and if one of the rules for rerouting the package applies to the physical conditions relating to the package and physical conditions relating to the recipient, triggering an action defined for the one of the rules that applies to the physical conditions.
Clause 2. The method of Clause 1, where the action defined for the one of the rules that applies to the physical conditions comprises sending a reroute instruction to a shipper in the shipping route.
Clause 3. The method of Clause 1, where the action defined for the one of the rules that applies to the physical conditions comprises: sending a notification to the recipient offering a special delivery option; receiving a message from the recipient accepting the special delivery option; and responsive to receiving the message accepting the special delivery option, sending a rerouting instruction to reroute the package for the special delivery option.
Clause 4. The method of Clause 3, where the method includes:
   responsive to receiving the message selecting the special delivery option, charging the recipient a fee for the special delivery option.
Clause 5. The method of Clause 1, where the physical conditions include one or more of a current time of day, a current location of the package, an anticipated handoff of the package to another intermediary shipper, and an anticipated location of the package, a current location of the recipient, an anticipated location of the recipient at the later time of day.
Clause 6. The method of Clause 1, where the rules for rerouting the package based on physical conditions includes at least one of a rule based on current physical proximity of the package and the recipient, a rule based on anticipated proximity of the package and the recipient, a rule based on an anticipated time of arrival for the package, and a rule based on an anticipated location of the recipient.
Clause 7. The method of Clause 1, wherein: one of the rules for rerouting the package based on physical conditions comprises a rule to reroute the package to a geolocation of the recipient; and the action defined for the rule to reroute the package to a geolocation of the recipient comprises sending a rerouting instruction to deliver the package to the geolocation of the recipient.
Clause 8. A system for shipping an item, the system comprising: one or more processors; and one or more memory devices in communication with the one or more processors, the memory devices having computer-readable instructions stored thereupon that, when executed by the processors, cause the processors to perform a method for dynamically rerouting a package during shipment, the method comprising: receiving a shipping route for shipping a package to a recipient; receiving one or more rules for rerouting the package based on physical conditions; monitoring physical conditions relating to the package and physical conditions relating to the recipient; determining whether one of the rules for rerouting applies to the physical conditions relating to the package and physical conditions relating to the recipient; and if one of the rules for rerouting the package applies to the physical conditions relating to the package and physical conditions relating to the recipient, triggering an action defined for the one of the rules that applies to the physical conditions.
Clause 9. The system of Clause 8, the method including: sending a notification message to the recipient with physical conditions relating to the package; receiving a reroute message from the recipient with an alternate geolocation; rerouting the package based on the alternate geolocation; and sending a reroute instruction to a shipper to reroute the package to the alternate geolocation.
Clause 10. The system of Clause 8, where the action defined for the one of the rules that applies to the physical conditions comprises: sending a notification to the recipient offering a special delivery option; receiving a message from the recipient accepting the special delivery option; and responsive to receiving the message accepting the special delivery option, sending a rerouting instruction to reroute the package for the special delivery option.
Clause 11. The system of Clause 10, where the method includes: responsive to receiving the message selecting the special delivery option, charging the recipient a fee for the special delivery option.
Clause 12. The system of Clause 8, where the physical conditions include one or more of a current time of day, a current location of the package, an anticipated location of the package, a current location of the recipient, an anticipated location of the recipient at the later time of day.
Clause 13. The system of Clause 8, where the rules for rerouting the package based on physical conditions includes at least one of a rule based on current physical proximity of the package and the recipient, a rule based on anticipated proximity of the package and the recipient, a rule based on an anticipated time of arrival for the package, and a rule based on an anticipated location of the recipient.
Clause 14. The system of Clause 8, wherein: one of the rules for rerouting the package based on physical conditions comprises a rule to reroute the package to a geolocation of the recipient; and the action defined for the rule to reroute the package to a geolocation of the recipient comprises sending a rerouting instruction to deliver the package to the geolocation of the recipient.
Clause 15. One or more computer storage media having computer executable instructions stored thereon which, when executed by one or more processors, cause the processors to execute a method for dynamically rerouting a package during shipment, the method comprising: receiving a shipping route for shipping a package to a recipient; receiving one or more rules for rerouting the package based on physical conditions; monitoring physical conditions relating to the package and physical conditions relating to the recipient; determining whether one of the rules for rerouting applies to the physical conditions relating to the package and physical conditions relating to the recipient; and if one of the rules for rerouting the package applies to the physical conditions relating to the package and physical conditions relating to the recipient, triggering an action defined for the one of the rules that applies to the physical conditions.
Clause 16. The computer storage media of Clause 15, where the action defined for the one of the rules that applies to the physical conditions comprises: sending a notification to the recipient offering a special delivery option; receiving a message from the recipient accepting the special delivery option; and responsive to receiving the message accepting the special delivery option, sending a rerouting instruction to reroute the package for the special delivery option.
Clause 17. The computer storage media of Clause 16, where the method includes: responsive to receiving the message selecting the special delivery option, charging the recipient a fee for the special delivery option.
Clause 18. The computer storage media of Clause 15, where the physical conditions include one or more of a current time of day, a current location of the package, an anticipated location of the package, a current location of the recipient, an anticipated location of the recipient at the later time of day.
Clause 19. The computer storage media of Clause 15, where the rules for rerouting the package based on physical conditions includes at least one of a rule based on current physical proximity of the package and the recipient, a rule based on anticipated proximity of the package and the recipient, a rule based on an anticipated time of arrival for the package, and a rule based on an anticipated location of the recipient.
Clause 20. The computer storage media of Clause 15, wherein: one of the rules for rerouting the package based on physical conditions comprises a rule to reroute the package to a geolocation of the recipient; and the action defined for the rule to reroute the package to a geolocation of the recipient comprises sending a rerouting instruction to deliver the package to the geolocation of the recipient.

Although the subject matter presented herein has been described in language specific to computer structural features, methodological and transformative acts, specific computing machinery, and computer readable media, it is to be understood that the subject matter set forth in the appended claims is not necessarily limited to the specific features, acts, or media described herein. Rather, the specific features, acts and mediums are disclosed as example forms of implementing the claimed subject matter.

The subject matter described above is provided by way of illustration only and should not be construed as limiting. Various modifications and changes can be made to the subject matter described herein without following the example configurations and applications illustrated and described, and without departing from the scope of the present disclosure, which is set forth in the following claims.

## Claims

1. A computer-implemented method for dynamically rerouting a package, the method comprising:
receiving a route selection from a sender device along with one or more routing rules for shipping a package to a recipient;
receiving one or more routing rules from a recipient device;
storing the route and the routing rules in a secure blockchain supported by a decentralized blockchain network;
monitoring conditions relative to the routing rules;
determining whether conditions of one of the routing rules are satisfied to trigger an action defined in the routing rule.

2. The method of Claim 1, where the action comprises sending a reroute instruction to a shipper in the route.

3. The method of Claim 1, where the action comprises:
sending a notification to the recipient offering a special delivery option;
receiving a message from the recipient accepting the special delivery option; and
responsive to receiving the message accepting the special delivery option, sending a rerouting instruction to reroute the package for the special delivery option,
where the method may include:
responsive to receiving the message selecting the special delivery option, charging the recipient a fee for the special delivery option.

4. The method of Claim 1, where the conditions include one or more of a current time of day, a current location of the package, an anticipated handoff of the package to another intermediary shipper, and an anticipated location of the package, a current location of the recipient, an anticipated location of the recipient at the later time of day; and/or
where the routing rules include at least one of a rule based on current physical proximity of the package and the recipient, a rule based on anticipated proximity of the package and the recipient, a rule based on an anticipated time of arrival for the package, and a rule based on an anticipated location of the recipient.

5. The method of Claim 1, wherein:
the routing rules comprise a rule to reroute the package to a geolocation of the recipient; and
the action defined in the routing rule comprises sending a rerouting instruction to deliver the package to the geolocation of the recipient.

6. A system for shipping an item, the system comprising:
one or more processors; and
one or more memory devices in communication with the one or more processors, the memory devices having computer-readable instructions stored thereupon that, when executed by the processors, cause the processors to perform a method for dynamically rerouting a package, the method comprising:
receiving a route selection from a sender device along with one or more routing rules for shipping a package to a recipient;
receiving one or more routing rules from a recipient device;
storing the route and the routing rules in a secure blockchain supported by a decentralized blockchain network;
monitoring conditions relative to the routing rules;
determining whether conditions of one of the routing rules are satisfied to trigger an action defined in the routing rule.

7. The system of Claim 6, the method including:
sending a notification message to the recipient with conditions relating to the package;
receiving a reroute message from the recipient with an alternate geolocation;
rerouting the package based on the alternate geolocation; and
sending a reroute instruction to a shipper to reroute the package to the alternate geolocation.

8. The system of Claim 6, where the action comprises:
sending a notification to the recipient offering a special delivery option;
receiving a message from the recipient accepting the special delivery option; and
responsive to receiving the message accepting the special delivery option, sending a rerouting instruction to reroute the package for the special delivery option,
where the method may include:
responsive to receiving the message selecting the special delivery option, charging the recipient a fee for the special delivery option.

9. The system of Claim 6, where the conditions include one or more of a current time of day, a current location of the package, an anticipated location of the package, a current location of the recipient, an anticipated location of the recipient at the later time of day; and/or
where the routing rules include at least one of a rule based on current physical proximity of the package and the recipient, a rule based on anticipated proximity of the package and the recipient, a rule based on an anticipated time of arrival for the package, and a rule based on an anticipated location of the recipient.

10. The system of Claim 6, wherein:
the routing rules comprise a rule to reroute the package to a geolocation of the recipient; and
the action comprises sending a rerouting instruction to deliver the package to the geolocation of the recipient.

11. One or more computer storage media having computer executable instructions stored thereon which, when executed by one or more processors, cause the processors to execute a method for dynamically rerouting a package according to any one of claims 1 to 5.
